# FASCICULE DE BREVET EUROPEEN

(11) **EP 4 399 395 B1**
(45) Date de publication et mention de la délivrance du brevet: **24.06.2026**
(21) Numéro de dépôt: 22782919.9
(22) Date de dépôt: 05.09.2022
(51) Int. Cl.: B25J 9/16, B23P 15/00, B23P 19/04, F01D 5/02, F01D 5/30, F04D 19/02, F04D 29/64

(54) **CHARGEMENT D'AUBES SUR UNE ROUE**
LADEN VON SCHAUFELN AUF EIN RAD
LOADING BLADES ONTO A WHEEL

(30) Priorité: 06.09.2021 FR 2109321
(43) Date de publication de la demande: 17.07.2024
(73) Titulaire: SAFRAN AIRCRAFT ENGINES, 75015 Paris (FR)
(72) Inventeur: DYLEWSKI, Nicolas Pierre, 77550 MOISSY-CRAMAYEL (FR); SCHAAL, Nathan, 77550 MOISSY-CRAMAYEL (FR)
(74) Mandataire: Gevers & Orès
(86) Numéro de dépôt international: PCT/FR2022/051676
(87) Numéro de publication internationale: WO 2023/031570

(56) Documents cités:
- WO-A1-2020/202363
- JP-A- S6 025 670
- US-A1- 2006 275 127
- DAMMANN MAIK ET AL: "Automated selection and assembly of sets of blades for jet engine compressors and turbines", vol. 16, 1 January 2018 (2018-01-01), 43rd North American Manufacturing Research Conference, NAMRC 43, 8-12 June 2015, UNC Charlotte, North Carolina, United States, pages 53 - 60, XP055887299, ISSN: 2351-9789, Retrieved from the Internet <URL:https://www.sciencedirect.com/science/article/pii/S2351978918312800/pdf?md5=3943181bf51f67e388311e2cb6590191&pid=1-s2.0-S2351978918312800-main.pdf> DOI: 10.1016/j.promfg.2018.10.159

## Description

### Domaine technique de l'invention

La présente invention concerne le chargement d'aubes sur une roue. Elle s'applique en particulier dans le domaine aéronautique, pour la fabrication d'un rotor d'un turboréacteur.

### Arrière-plan technologique

Il est connu de charger des aubes sur une roue de rotor de turbocompresseur en chargeant entièrement manuellement des aubes dans une encoche d'une glissière circulaire de la roue.

Plus précisément, un premier montage des aubes, dit à blanc, permettant le réglage du jeu circonférentiel est tout d'abord réalisé manuellement.

En effet, il est nécessaire de conserver un jeu entre les aubes pendant le montage, de manière à compenser la dilatation thermique des pièces lors de la montée en température dans le turboréacteur.

Pour ce faire, il est connu d'utiliser deux types d'aubes - étroites et larges - se différenciant par la taille circonférentielle de leur plateforme, ce qui permet, par un choix judicieux du nombre d'aubes de chaque type, d'obtenir un jeu s'approchant au plus près du minimum de l'intervalle de tolérance fourni dans les spécifications.

Un opérateur monte ainsi dans un premier temps, un certain nombre d'aubes étroites et larges puis procède par itérations successives jusqu'à obtenir un jeu minimal compris dans l'intervalle de tolérance.

Ensuite, les aubes sont démontées et des caractères d'identification portés par les aubes sont lus par un opérateur qui, en outre, les pèse.

À partir de ces informations, un logiciel est utilisé pour déterminer le positionnement circonférentiel des aubes permettant de minimiser le balourd.

Enfin, un opérateur réalise le montage final des aubes selon l'ordre indiqué par le logiciel, ainsi que le montage de verrous pour immobiliser les aubes.

Au cours de ce processus, le montage à blanc et le démontage sont chronophages alors qu'ils ne servent qu'à la mesure du jeu. De plus, ils présentent un risque important de choc sur les pièces, par les nombreuses manipulations mises en jeu. Quant à la phase de lecture des caractères, contraignante et répétitive pour les opérateurs, elle peut conduire à une fatigue oculaire et entraine un risque qualité important lié aux erreurs dans la saisie manuelle des données (facteurs humains).

L'article « Automated selection and assembly of sets of blades for jet engine compressors and turbines » de Dammann Maik et al. décrit un chargement d'aubes sur une roue au moyen d'un bras articulé.

Il peut ainsi être souhaité de prévoir un procédé de chargement d'aubes sur une roue qui permette de s'affranchir d'au moins une partie des problèmes et contraintes précités.

### Résumé de l'invention

Il est donc proposé un procédé de chargement d'aubes selon la revendication 1.

Grâce à l'invention, il est facile de remplacer des aubes étroites situées à une extrémité par des aubes larges, ou bien des aubes larges situées à l'autre extrémité par des aubes étroites, afin d'ajuster le jeu circonférentiel des aubes chargées.

Des caractéristiques optionnelles de l'invention sont énoncées dans les revendications 2 à 8.

Il est également proposé une installation de fabrication d'une hélice selon la revendication 9.

### Brève description des figures

L'invention sera mieux comprise à l'aide de la description qui va suivre, donnée uniquement à titre d'exemple et faite en se référant aux dessins annexés dans lesquels :
- la figure 1 est une vue de côté très simplifiée d'une installation selon l'invention de chargement d'aubes sur une roue d'un rotor d'un compresseur haute pression d'un turboréacteur,
- la figure 2 est une vue en trois dimensions d'une des aubes destinées à être chargées,
- la figure 3 est une vue en trois dimensions d'un pied de l'aube de la figure 2,
- la figure 4 est une vue en trois dimensions d'une glissière de la roue, dans laquelle les aubes sont destinées à être chargées,
- la figure 5 est une vue en trois dimensions d'un système d'identification des aubes,
- la figure 6 est un schéma bloc d'un procédé de chargement des aubes sur la roue,
- la figure 7 est une vue de dessus de la glissière et d'une caméra de l'installation de montage, lors de la détermination d'une position azimutale de l'encoche de chargement,
- la figure 8 est une vue similaire à la figure 7, lors de la détermination d'une position radiale de l'encoche de chargement, et
- la figure 9 est une vue de dessus d'un plateau de présentation des aubes et d'une liste définissant un ordre de chargement des aubes.

### Description détaillée de l'invention

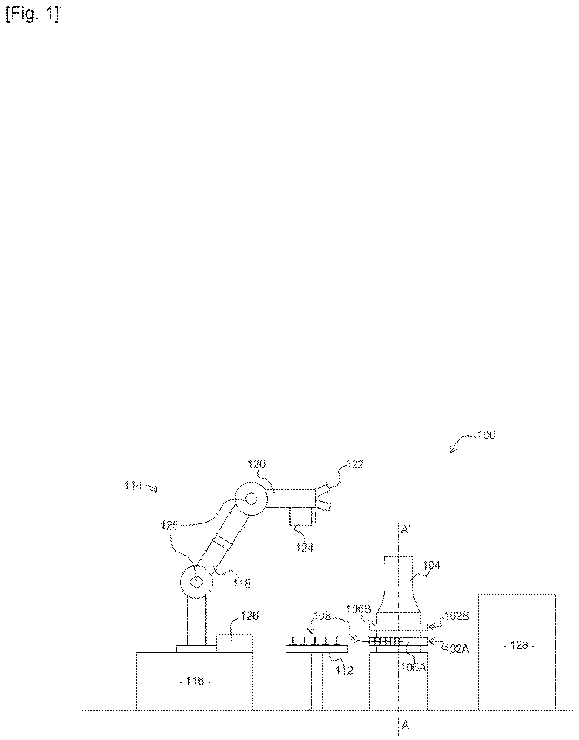

En référence à la figure 1, un exemple d'installation 100 selon l'invention de montage d'une roue aubagée (c'est-à-dire une roue sur laquelle des aubes ont été chargées) appartenant par exemple à un rotor 104 d'un compresseur haute pression d'un turboréacteur va à présent être décrite. Les termes de « roue aubagée » couvrent également de manière générale tout type d'hélice et de soufflante.

Généralement, le rotor 104 présente un axe de rotation AA' et comporte, le long de ce dernier, plusieurs étages comportant des roues 102A, 102B respectives ayant également l'axe AA' comme axe de rotation. Chaque roue 102A, 102B comporte une glissière circulaire 106A, 106B (par exemple sous la forme d'une rainure) autour de l'axe de rotation AA' et des aubes 108 sont chargées dans cette glissière 106A, 106B pour former une roue aubagée. Le terme d' « aube » couvre également tout type de pale.

Sur la figure 1, la roue 102A est partiellement montée, c'est-à-dire qu'une partie seulement des aubes 108 a été chargée dans la glissière circulaire 106A. Le montage de la roue 102B n'a pas encore commencé.

L'installation 100 comporte tout d'abord un bâti 110 sur lequel le rotor 104 est destiné à être posé, avec son axe de rotation AA' s'étendant verticalement dans l'exemple décrit.

L'installation 100 comporte en outre un plateau 112 de présentation d'aubes 108 destinées à être chargées dans l'une des glissières circulaires 106A, 106B.

L'installation comporte en outre un robot 114 de manipulation des aubes 108.

Le robot 114 comporte tout d'abord un socle 116 et un bras articulé 118 se projetant du socle 116. Le bras articulé 118 comporte plusieurs segments successifs. Dans l'exemple écrit, chacun de ces segments est mobile en rotation par rapport au(x) segment(s) voisin(s) selon un axe de rotation. Le dernier des segments forme une extrémité 120 du bras articulé 118.

Le robot 114 comporte en outre un préhenseur d'aube 122 et une caméra 124, tous les deux fixés à l'extrémité 120 du bras articulé 118. Dans l'exemple décrit, le préhenseur 122 comporte une pince dont les mors sont spécifiques pour s'adapter à la forme des aubes.

Le robot 114 est de préférence un robot collaboratif (également appelé « cobot ») qui dispose d'un dispositif de mesure 125 conçu pour mesurer un effort exercé par le préhenseur 122 sur son environnement. Par exemple, le dispositif de mesure 125 comporte des capteurs de couple dans un ou plusieurs des axes de rotation, ce qui lui permet de mesurer l'effort exercé par le préhenseur 122 lors de son déplacement et de réagir en conséquence.

En particulier, le robot 114 comporte un système de sécurité (non représenté) conçu pour utiliser l'effort mesuré et pour réaliser un arrêt d'urgence du bras articulé 118 lorsque cet effort dépasse un seuil prédéfini. La réactivation du bras articulé 118 nécessite généralement, suite à cet arrêt d'urgence, un réarmement manuel par l'opérateur.

Le robot 114 comporte en outre un dispositif informatique 126 de commande du bras articulé 118, du préhenseur 122 et de la caméra 124. Par exemple, le dispositif informatique 126 est porté par le socle 116.

L'installation 100 comporte en outre un système 128 d'identification des aubes 108, qui sera décrit plus loin plus en détail.

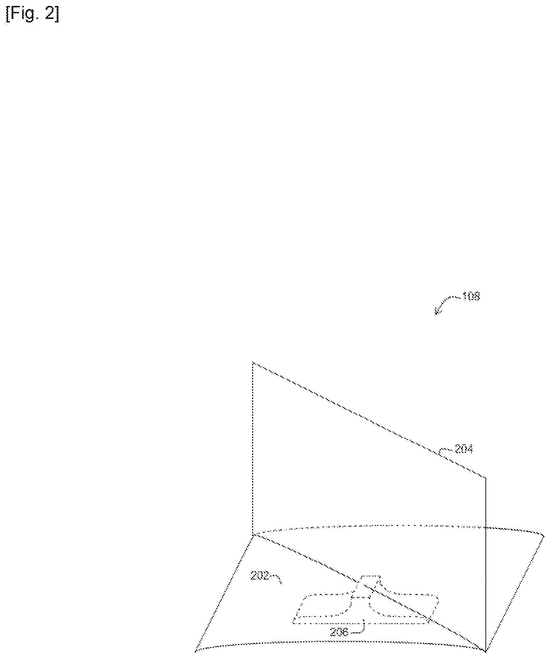

En référence à la figure 2, un exemple d'aube 108 va à présent être décrit plus en détail.

L'aube 108 comporte une plateforme 202 présentant une face interne destinée à être orientée vers le rotor 104 et, à l'opposé, une face externe destinée à être orientée vers l'opposé du rotor 104. L'aube 108 comporte en outre une pale 204 se projetant depuis la face externe de la plateforme 202 et, dans l'exemple décrit, un pied 206 à attache marteau porté par la face interne de la plateforme 202.

Les aubes 108 peuvent être de deux types suivant leur taille circonférentielle : large (grande taille circonférentielle) ou étroite (petite taille circonférentielle). Les aubes d'un même type (large ou étroite) ont ainsi sensiblement la même taille circonférentielle. Par exemple, la taille circonférentielle est comprise dans la plage définie par une taille circonférentielle nominale plus ou moins une tolérance. Cette tolérance est de préférence de moins de 0,2 mm, de préférence de moins de 0,1 mm, par exemple de 0,08 mm. La taille circonférentielle nominale des aubes 108 larges ou bien étroites est par exemple comprise entre 15 et 18 mm (la taille circonférentielle nominale des aubes larges étant supérieure à celle des aubes étroites). De préférence, la différence de taille circonférentielle nominale entre les aubes larges et étroites est comprise entre 0,1 et 0,5 mm, par exemple 0,3 mm. Les plages de tailles circonférentielles possibles pour les aubes étroites et larges sont ainsi disjointes, la plage pour les aubes larges étant au-dessus de celle pour les aubes étroites.

Voici quelques exemples de dimensionnements possibles :
Exemple 1 :
   - taille nominale des aubes étroites : 15,12 mm, avec une tolérance de 0,08 mm (toutes les aubes étroites ont ainsi des tailles circonférentielles comprises entre 15,04 mm et 15,20 mm), et
   - Taille nominale des aubes larges : 15,42 mm, avec une tolérance de 0,08 mm (toutes les aubes larges ont ainsi des tailles circonférentielles comprises entre 15,34 mm et 15,48 mm).
Exemple 2 :
   - taille nominale des aubes étroites : 15,18 mm, avec une tolérance de 0,08 mm (toutes les aubes étroites ont ainsi des tailles circonférentielles comprises entre 15,10 mm et 15,26 mm), et
   - taille nominale des aubes larges : 15,48 mm, avec une tolérance de 0,08 mm (toutes les aubes larges ont ainsi des tailles circonférentielles comprises entre 15,40 mm et 15,56 mm).
Exemple 3 :
   - taille nominale des aubes étroites : 16,25 mm, avec une tolérance de 0,08 mm (toutes les aubes étroites ont ainsi des tailles circonférentielles comprises entre 16,17 mm et 16,33 mm), et
   - taille nominale des aubes larges : 16,55 mm, avec une tolérance de 0,08 mm (toutes les aubes larges ont ainsi des tailles circonférentielles comprises entre 16,47 mm et 17,03 mm).
Exemple 4 :
   - taille nominale des aubes étroites : 16,98 mm, avec une tolérance de 0,08 mm (toutes les aubes étroites ont ainsi des tailles circonférentielles comprises entre 16,90 mm et 17,06 mm), et
   - taille nominale des aubes larges : 17,28 mm, avec une tolérance de 0,08 mm (toutes les aubes larges ont ainsi des tailles circonférentielles comprises entre 17,20 mm et 17,36 mm).

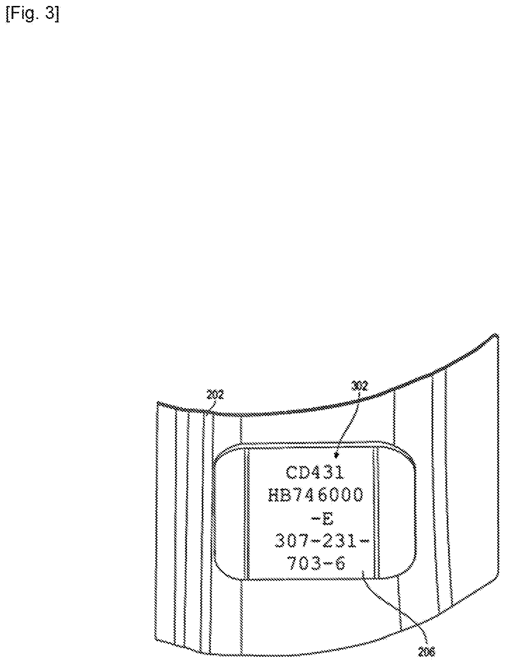

En référence à la figure 3, des caractères d'identification 302 sont présents sur l'aube 108, par exemple sur son pied 206. Ces caractères d'identification 302 comportent par exemple au moins un parmi : une référence de l'aube 108, un numéro de série et un code du fabricant. Ils peuvent en outre inclure un ou plusieurs caractères de contrôle de validité des autres caractères. Les caractères d'identification 302 sont de préférence gravés, par exemple en micro-percussion.

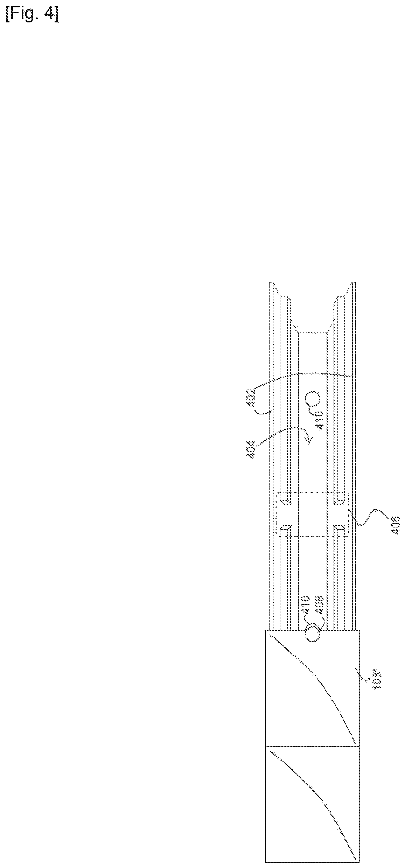

En référence à la figure 4, un exemple de glissière circulaire 102A va à présent être décrit plus en détail, sachant que l'autre glissière circulaire 102B est similaire.

La glissière circulaire 102A comporte tout d'abord deux rails circonférentiels 402 sur lesquels les faces internes des plateformes 202 des aubes 108 sont destinées à reposer. La glissière circulaire 102A comporte en outre, par exemple entre les deux rails 402, une gorge circonférentielle 404 de guidage des pieds 206 des aubes 108. Cette gorge 404 est munie d'une encoche de chargement 406 par laquelle les pieds 206 peuvent être insérés dans la gorge 404 afin de charger les aubes 108 sur la glissière circulaire 102A. La glissière 102A comporte en outre deux verrous 408 (un seul est illustré sur la figure 4), situés de part et d'autre de l'encoche de chargement 406. Dans l'exemple décrit, ces verrous 408 sont sous la forme de pions insérés dans des trous de réceptions 410 ménagés dans la gorge 404. Ces verrous 408 sont conçus pour coopérer avec des aubes de verrou 108* pour verrouiller les aubes 108 chargées dans la glissière 102A. Dans l'exemple décrit, quatre aubes de verrou 108* sont prévues. Plus précisément, deux aubes de verrou 108* sont prévues par verrou 408 pour venir en contact de part et d'autre de ce dernier. La plateforme 202 de chaque aube de verrou 108* présente en particulier une encoche de réception du verrou 408 associé.

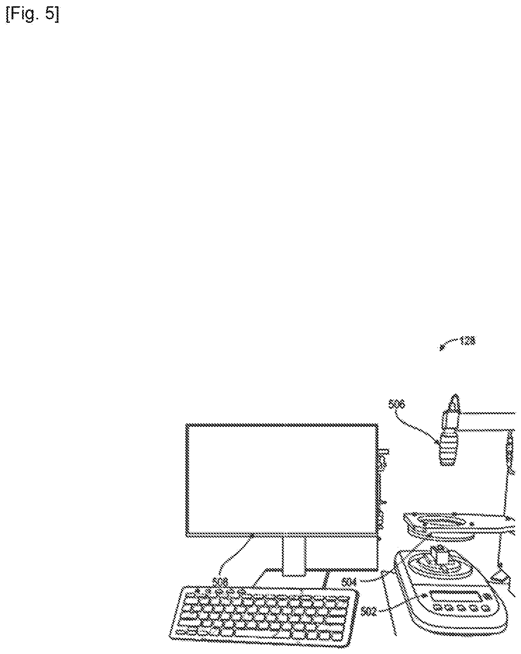

En référence à la figure 5, un exemple de système d'identification 128 va à présent être décrit plus en détail.

Le système d'identification 128 comporte tout d'abord une balance 502 conçue pour recevoir une aube 108 afin de la peser.

Le système d'identification 128 comporte en outre un éclairage 504, par exemple à multi-segments, conçu pour éclairer l'aube 108 reçue sur la balance selon plusieurs directions d'éclairage différentes, par exemple quatre directions différentes.

Le système d'identification 128 comporte en outre un appareil photographique 506 conçu pour prendre des photographies de l'aube 108 reçue sur la balance 502.

Le système d'identification 128 comporte en outre un dispositif informatique 508 d'identification des aubes. Le dispositif informatique 508 est conçu pour mettre en œuvre un système d'apprentissage automatique (de l'anglais « machine learning ») pour s'affranchir des contraintes liées à la fois au positionnement précis de l'aube sur la balance 502 pour l'acquisition de l'image, mais également à la variabilité dans les états de surface de l'aube et dans les qualités de la gravure des caractères.

Ainsi, le dispositif informatique 508 est conçu pour commander l'éclairage pour prendre plusieurs photos avec des orientations de lumière différentes (selon les quatre directions dans l'exemple décrit). Le dispositif informatique 508 est en outre conçu pour combiner ces différentes images en une seule image finale dans laquelle les caractères ressortent par rapport au fond grâce aux ombres résultant des différents éclairages.

Le dispositif informatique 508 est ainsi conçu pour fournir cette image finale au système à apprentissage automatique pour déterminer les caractères gravés.

Dans l'exemple décrit, le système à apprentissage automatique a été préalablement entraîné sur la base d'une bibliothèque de photos d'environ 600 aubes. Chaque caractère a été appris une dizaine de fois en moyenne, à l'exception des caractères semblables (5 et 6, 6 et 8, J et T, etc.) pour lesquels plus d'images ont été labellisées.

Le dispositif informatique 508 est de préférence en outre conçu pour mettre en oeuvre des algorithmes de détection d'erreur à la lecture automatique pour en valider l'exactitude et éliminer les erreurs de lecture potentielles.

Ainsi, pour chaque aube 108, le dispositif informatique 508 est par exemple conçu pour vérifier que la référence lue est conforme à l'attendu (aube étroite, large ou verrou) en comparant avec une liste prédéfinie. Il en est de même pour le code du fabricant gravé sur l'aube.

En outre, le dispositif informatique 508 est de préférence conçu pour valider les caractères lus à partir des caractères de contrôle, par exemple via l'algorithme checksum.

Le dispositif informatique 508 est en outre par exemple conçu pour vérifier que la masse de l'aube obtenue par la balance 502 est comprise dans un intervalle de tolérance prédéfini.

Les cas d'erreurs de lecture sont donc identifiés et l'opérateur effectue les corrections à la main, grâce à la photo qui s'affiche en parallèle des caractères lus.

De plus, les caractères non lus correctement peuvent être réinjectés dans le modèle afin de l'améliorer, ce qui rend le système évolutif : il s'améliore au fil du temps.

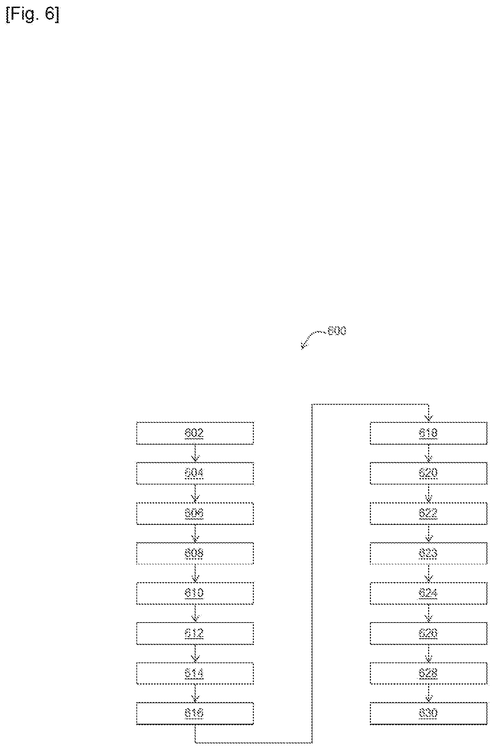

En référence à la figure 6, un exemple de procédé 600 de chargement des aubes 108 sur la roue 102A va à présent être décrit.

Au cours d'une étape 602, un opérateur obtient des aubes 108, et les dispose sur le plateau 112 après un contrôle visuel, selon un ordre indiqué par le dispositif informatique 508. Par exemple, l'ordre est le suivant : une aube de verrou de « type 1 » (positionnement du trou de réception à droite de la plateforme), une aube de verrou de « type 2 » (positionnement du trou de réception à gauche de la plateforme), n aubes étroites, N aubes larges, une aube verrou de « type 1 », et une aube de verrou de « type 2 ». Les nombres n et N peuvent être différents d'un étage à l'autre et sont par exemple préalablement déterminés à partir de la moyenne et l'écart-type des nombres d'aubes montées sur des précédents rotors.

Au cours d'une étape 604, les aubes 108 sont identifiées au moyen du système d'identification 128. Ainsi, pour chacune des aubes 108, un opérateur prend l'aube 108 du plateau 112, et la pose sur la balance 502. Le système de lecture automatisé 108 pèse l'aube et lit son numéro de série. Puis, l'opérateur repose l'aube 108 sur le plateau 112.

Au cours d'une étape 606, le dispositif informatique 126 commande le bras articulé 118 et la caméra 124 pour photographier le plateau 112.

Au cours d'une étape 608, le dispositif informatique 126 analyse la photographie du plateau 112 pour vérifier qu'aucune aube ne manque et pour déterminer les positions des aubes sur le plateau.

Ainsi, la position des aubes sur le plateau est connue, même si elles ont été légèrement déplacées (même involontairement). Comme en outre la hauteur du plateau 112 est connue du dispositif informatique 126, les aubes sont précisément positionnées dans l'espace.

Au cours d'une étape 610, le dispositif informatique 126 commande le bras articulé 118 pour déplacer la caméra 124 à la hauteur de l'étage souhaité en pointant la caméra 124 radialement par rapport à l'axe de rotation AA'.

Au cours d'une étape 612, le dispositif informatique 126 analyse l'image de la caméra 124 pour y localiser l'encoche de chargement 406 par la caméra 124. Le dispositif informatique 126 déplace alors la caméra 124 le long d'un cercle centré sur l'axe de rotation AA' du rotor 104, ainsi que parallèlement à l'axe de rotation AA', tout en maintenant la caméra 124 orientée radialement, afin de centrer la position de l'encoche dans l'image de la caméra 124.

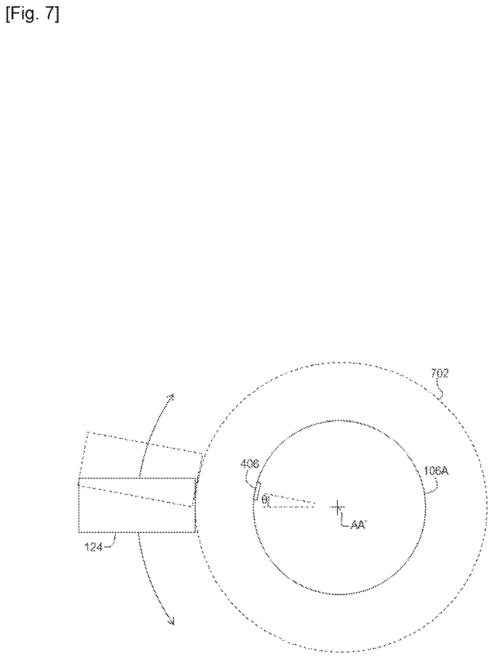

Cette étape 612 est illustrée sur la figure 7, où le cercle porte la référence 702 et où l'encoche de chargement 406 présente une position azimutale 8. L'encoche de chargement 406 est centrée dans l'image de la caméra 124 lorsque cette dernière se trouve dans la position représentée en pointillée.

Ainsi, la position azimutale θ et la position verticale Z de l'encoche 406 peuvent être déterminées précisément, même si le rotor 104 posé sur le bâti a tourné autour de son axe de rotation AA'.

De retour à la figure 6, au cours d'une étape 614, le dispositif informatique 126 détermine la position azimutale θ et la position verticale Z de l'encoche 406 à partir de la position de la caméra 124 lorsque l'encoche 406 est centrée dans l'image.

Au cours d'une étape 616, le dispositif informatique 126 commande le bras articulé 118 pour placer le préhenseur 122 en face de l'encoche 406.

Au cours d'une étape 618, le dispositif informatique 126 commande le bras articulé 118 pour déplacer radialement le préhenseur 122 en direction de l'encoche 406, et reçoit l'effort exercé par le préhenseur 122 tel que mesuré par le système de mesure 125.

Au cours d'une étape 619, le dispositif informatique 126 détecte que l'effort dépasse un seuil prédéfini (de préférence inférieur à celui utilisé par le système de sécurité) suite à la rencontre du préhenseur 122 avec l'encoche 406. En réponse, le dispositif informatique 126 arrête le bras articulé 118.

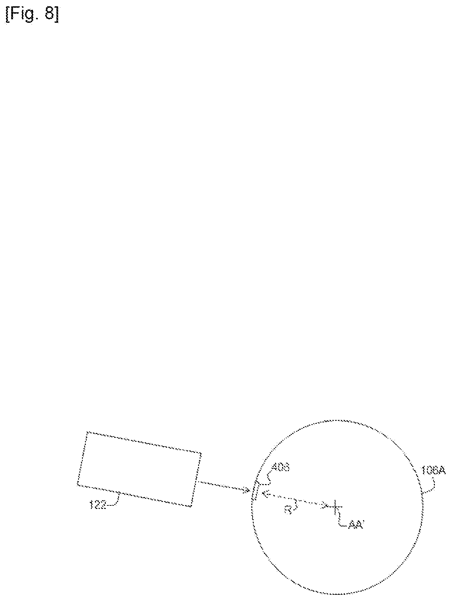

Cette étape 619 est illustrée sur la figure 8.

De retour à la figure 6, au cours d'une étape 620, le dispositif informatique 126 détermine alors la position radiale R de l'encoche 406 (c'est-à-dire la distance séparant radialement l'encoche 406 de l'axe de rotation AA') à partir de la position du préhenseur 122 lorsque le bras articulé 118 a été arrêté.

Ainsi, l'encoche 406 est complètement positionnée dans l'espace par la position verticale Z, la position azimutale θ et la position radiale R. Il est donc possible pour le robot 114 d'atteindre l'encoche 406 dans la direction de chargement, c'est-à-dire dans la direction normale au rotor 104 (direction radiale par rapport à l'axe de rotation AA') pour réussir le chargement des aubes 108.

À ce stade du procédé, le dispositif informatique 126 connait la localisation précise de l'encoche de chargement et de chacune des aubes 108 présentes sur le plateau 112.

Le procédé continue alors avec la sélection d'aubes et la détermination de positions des aubes 108 sélectionnées le long de la glissière 106A à charger.

Pour cela, au cours d'une étape 622, le dispositif informatique 508 du système d'identification 128 détermine une liste d'aubes 108 destinées à être chargées dans la glissière 106A en plus des aubes de verrou 108*. Les aubes de cette liste sont ainsi destinées à se succéder le long de la glissière 106A dans l'ordre de cette liste, suivant un sens de rotation prédéfini depuis l'encoche de chargement 406 jusqu'à revenir à cette encoche de chargement 406.

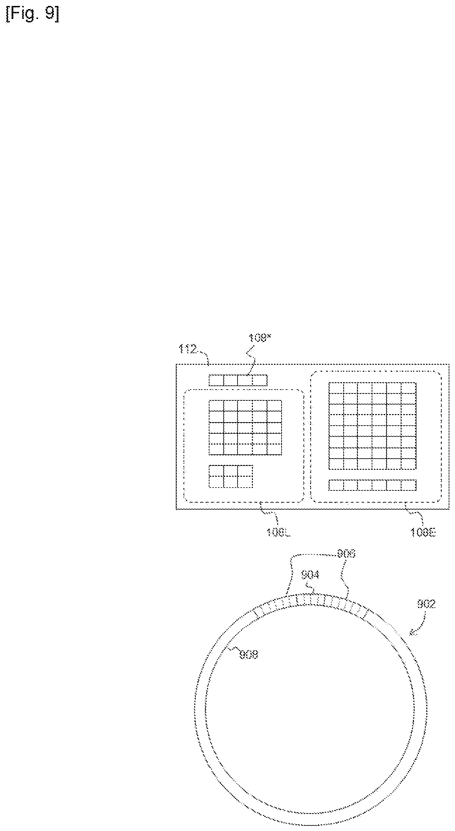

À chacune des deux extrémités de la liste, un nombre prédéfini d'emplacements est réservé pour y placer des aubes uniquement larges d'un côté et uniquement étroites de l'autre. De préférence, le même nombre d'emplacements est réservé aux deux extrémités de la liste. Les aubes dans ces emplacements réservés sont appelées par la suite « aubes d'extrémité ». Les aubes de la liste situées entre ces deux groupes d'emplacements réservés sont appelées par la suite « aubes centrales ». Le nombre prédéfini d'emplacements réservés à chaque extrémité, et donc le nombre d'aubes d'extrémité à chaque extrémité, est d'au moins deux, de préférence au moins quatre, par exemple égal à six (comme dans l'exemple qui sera décrit plus loin en référence à la figure 9).

Au cours d'une étape 623, le dispositif informatique 126 du robot 114 reçoit la liste d'aubes de la part du dispositif informatique 508 du système d'identification 128.

En référence à la figure 9, un exemple de définition d'emplacements réservés va être décrit plus en détail.

Dans cet exemple, 89 aubes dont 31 larges 108L et 58 étroites 108E sont disponibles et disposées sur le plateau 112, en plus des 4 aubes de verrou 108*.

77 aubes 108 sont destinées à être chargées, en plus des 4 aubes de verrou 108*. Ainsi, la liste (représentée de manière circulaire et désignée par la référence 902 sur la figure 9) comporte 77 emplacements, en plus des quatre emplacements (désignés par la référence 904 sur la figure 9) pour les aubes 108* de verrou. Parmi ces 77 emplacements, 6 sont réservés à chaque extrémité, d'un côté pour des aubes larges 108L et de l'autre pour des aubes étroites 108E (ces aubes larges et étroites constitueront les aubes d'extrémité). Entre ces emplacements réservés (désignés par la référence 906 sur la figure 9), 65 emplacements (désignés par la référence 908 sur la figure 9) sont disponibles pour des aubes larges 108L et/ou étroites 108E (qui constitueront les aubes centrales).

Lorsque 77 aubes ont été sélectionnées pour être chargées, il reste donc 12 aubes restantes.

Comme cela sera expliqué par la suite, les emplacements 906 réservés à chaque extrémité de la liste permettent de remplacer très facilement des aubes étroites d'extrémité pour des aubes larges restantes, ou bien des aubes larges d'extrémité pour des aubes étroites restantes, afin d'ajuster le jeu circonférentiel des aubes chargées.

Afin que ces remplacements affectent peu le balourd des aubes chargées, chaque aube d'extrémité et chaque aube restante est de préférence plus légère que chacune des aubes centrales.

Dans l'exemple décrit, les aubes 108 sont placées par le dispositif informatique 508 dans la liste 902 de la manière suivante. L'aube ayant le poids le plus élevé est placée au milieu de la liste. Puis, une aube est placée successivement à droite et à gauche de la ou des aubes déjà placées, par ordre décroissant de poids des aubes (qu'elles soient larges ou étroites). Ainsi, les aubes les plus lourdes sont placées à l'opposé des verrous, en regard de ces derniers, ce qui permet de garder un balourd faible.

Lorsque tous les emplacements centraux de la liste 902 ont été remplis (c'est-à-dire les emplacements de la liste situés entre les emplacements d'extrémité réservés), le dispositif informatique 508 place uniquement des aubes étroites, parmi les aubes étroites restantes, dans les emplacements d'extrémité réservés pour les aubes étroites, par ordre décroissant de poids en allant vers l'extrémité de la liste 902 (vers les emplacements 904 pour les aubes de verrou 108*). De même, le dispositif informatique 508 place uniquement des aubes larges, parmi les aubes larges restantes, dans les emplacements d'extrémité réservés pour les aubes larges, par ordre décroissant de poids en allant vers l'extrémité de la liste (vers les emplacements 904 pour les aubes de verrou 108").

Dans l'exemple décrit, les aubes restantes sont donc celles qui sont les plus légères.

Au cours d'une étape 624, le dispositif informatique 126 commande le bras articulé 118 et le préhenseur 122 pour que ce dernier saisisse sur le plateau 112 et insère les aubes 108 une par une, suivant la liste déterminée précédemment, dans l'encoche 406. Pour charger les aubes 108 dans l'encoche 406, le dispositif informatique 126 utilise sa position spatiale déterminée précédemment. Dans l'exemple décrit, chaque nouvelle aube chargée vient pousser les précédentes.

Au cours d'une étape 626, un opérateur place les verrous 408 et les aubes de verrou 108* pour verrouiller les aubes 108 chargées.

Au cours d'une étape 628, un opérateur mesure le jeu circonférentiel des aubes 108 chargées et le compare à un jeu circonférentiel souhaité.

Au cours d'une étape 630, si le jeu circonférentiel est trop petit, les aubes larges d'extrémité sont facilement accessibles et l'opérateur en retire une ou plusieurs (après avoir retiré les verrous 408 et les aubes de verrou 108*) pour les remplacer par une ou plusieurs aubes étroites restantes, généralement par le même nombre. De manière similaire, si le jeu circonférentiel est trop grand, les aubes étroites d'extrémité sont facilement accessibles et l'opérateur en retire une ou plusieurs (après avoir retiré les verrous 408 et les aubes de verrou 108*) pour les remplacer par une ou plusieurs aubes larges restantes, généralement par le même nombre.

Du fait que les aubes d'extrémité et les aubes restantes sont les plus légères, le remplacement n'induit pas de changement significatif du balourd.

Ainsi, le jeu circonférentiel est ajusté sans qu'il ne soit nécessaire de retirer, puis recharger toutes les aubes 108.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Procédé (600) de chargement d'aubes (108) sur une roue (102A, 102B) comportant une glissière circulaire (106A, 106B) présentant une encoche (406) de chargement des aubes (108), au moyen d'un bras articulé (118) présentant une extrémité (120) munie d'un préhenseur d'aube (122), le procédé comportant :
- la détermination (622) par un dispositif informatique (508) d'une liste d'aubes destinées à se succéder le long de la glissière (106A) dans l'ordre de cette liste, suivant un sens de rotation prédéfini depuis l'encoche (406) jusqu'à revenir à cette encoche (406), de sorte que la liste présente un nombre prédéfini d'aubes à une première extrémité, dites aubes de première extrémité, et un nombre prédéfini d'aubes à une deuxième extrémité de la liste, dites aubes de deuxième extrémité, chacune des aubes de première extrémité présentant une taille circonférentielle inférieure à chacune des aubes de deuxième extrémité ; et
- la commande (624) du bras articulé (118) pour que le préhenseur (122) saisisse et charge les aubes (108) dans l'encoche (406) selon l'ordre de la liste.

2. Procédé selon la revendication 1, dans lequel chacune des aubes de la liste entre les aubes de première et deuxième extrémités a un poids supérieur à chacune des aubes de première et deuxième extrémités.

3. Procédé selon la revendication 2, dans lequel les aubes de la liste présentent des poids décroissants depuis un milieu de la liste vers chaque extrémité de la liste.

4. Procédé selon l'une quelconque des revendications 1 à 3, comportant en outre :
- la mesure (628) d'un jeu circonférentiel des aubes (108) chargées ;
- si le jeu circonférentiel est trop petit, le remplacement (630) d'une ou plusieurs aubes de première extrémité par une ou plusieurs aubes présentant une taille circonférentielle plus grande ; et
- si le jeu circonférentiel est trop grand, le remplacement (630) d'une ou plusieurs aubes de deuxième extrémité par une ou plusieurs aubes présentant une taille circonférentielle plus petite.

5. Procédé selon l'une quelconque des revendications 1 à 4, dans lequel le bras articulé comporte un système de sécurité pour mesurer un effort exercé sur le préhenseur et arrêter le bras articulé lorsque cet effort dépasse un seuil prédéfini, comportant :
- la commande du bras articulé pour placer le préhenseur en face radialement, par rapport à un axe de rotation (AA') du rotor, d'une encoche ménagée dans l'étage pour l'insertion des aubes ;
- la commande du bras articulé pour déplacer radialement le préhenseur en direction de l'encoche jusqu'à l'arrêt du bras articulé par le système de sécurité suite à la rencontre du préhenseur avec le rotor ; et
- la détermination d'une position radiale (R) de l'encoche (406) à partir de la position du préhenseur lorsque le bras articulé a été arrêté par le système de sécurité ;
et dans lequel la commande du bras articulé pour charger les aubes comporte l'insertion des aubes une par une dans l'encoche à la position radiale déterminée, dans l'ordre de la liste.

6. Procédé selon la revendication 5, dans lequel une caméra (124) est fixée à l'extrémité du bras articulé et comportant en outre :
- la commande du bras articulé pour déplacer la caméra le long d'un cercle centré sur l'axe de rotation (AA') du rotor, ainsi que parallèlement à l'axe de rotation (AA'), tout en maintenant la caméra orientée radialement, afin de centrer la position de l'encoche (406) dans l'image fournie par la caméra ; et
- la détermination d'une position azimutale (θ) et le long de l'axe de rotation (Z) de l'encoche (406), la commande du bras articulé pour que le préhenseur saisisse et insère les aubes une par une dans l'encoche étant réalisée en outre à partir des positions azimutale (θ) et le long de l'axe de rotation (Z) déterminées.

7. Procédé selon la revendication 5 ou 6, comportant en outre :
- la photographie d'un plateau (112) sur lequel les aubes (108) à charger sont disposées ; et
- l'analyse de la photographie pour déterminer les positions des aubes sur le plateau (112).

8. Procédé selon l'une quelconque des revendications 1 à 7, dans lequel la roue (102A, 102B) appartient à un rotor (104) d'un turboréacteur.

9. Installation de fabrication d'une hélice, l'hélice comportant une glissière circulaire présentant une encoche de chargement d'aubes, comportant :
- un bras articulé présentant une extrémité munie d'un préhenseur d'aube ;
- un dispositif informatique (508) conçu pour déterminer une liste d'aubes destinées à se succéder le long de la glissière (106A) dans l'ordre de cette liste, suivant un sens de rotation prédéfini depuis l'encoche (406) jusqu'à revenir à cette encoche (406), de sorte que la liste présente un nombre prédéfini d'aubes à une première extrémité, dites aubes de première extrémité, et un nombre prédéfini d'aubes à une deuxième extrémité de la liste, dites aubes de deuxième extrémité, chacune des aubes de première extrémité présentant une taille circonférentielle inférieure à chacune des aubes de deuxième extrémité ; et
- un dispositif informatique (126) conçu pour commander le bras articulé (118) pour que le préhenseur (122) saisisse et charge les aubes (108) dans l'encoche (406) selon l'ordre de la liste.

## Patentansprüche

1. Verfahren (600) zum Laden von Schaufeln (108) an einem Rad (102A, 102B), das eine kreisförmige Führungsschiene (106A, 106B) aufweist, die eine Nut (406) zum Laden von Schaufeln (108) aufweist, mithilfe eines Gelenkarms (118), der ein Ende (120) aufweist, das mit einem Schaufelgreifer (122) versehen ist, wobei das Verfahren Folgendes umfasst:
- Festlegen (622), mit einer Computervorrichtung (508), von einer Liste von Schaufeln, die entlang der Führungsschiene (106A) in der Reihenfolge dieser Liste in einer vorgegebenen Rotationsrichtung von der Nut (406) aus aufeinander folgen sollen, bis sie wieder an diese Nut (406) gelangen, sodass die Liste eine vorgegebene Anzahl von als Schaufeln am ersten Ende bezeichneten Schaufeln an einem ersten Ende und eine vorgegebene Anzahl von als Schaufeln am zweiten Ende bezeichneten Schaufeln an einem zweiten Ende aufweist, wobei jede der Schaufeln am ersten Ende eine Größe in Umfangsrichtung aufweist, die kleiner ist als die von jeder der Schaufeln am zweiten Ende; und
- Ansteuern (624) des Gelenkarms (118), damit der Greifer (122) die Schaufeln (108) der Reihenfolge der Liste entsprechend greift und sie in die Nut (406) ladt.

2. Verfahren nach Anspruch 1, wobei jede der Schaufeln in der Liste zwischen den Schaufeln am ersten und am zweiten Ende ein Gewicht aufweist, das größer ist, als jede der Schaufeln am ersten und am zweiten Ende.

3. Verfahren nach Anspruch 2, wobei das Gewicht der Schaufeln in der Liste von einem Mittelpunkt der Liste aus in Richtung zu jedem Ende in der Liste abnimmt.

4. Verfahren nach einem der Ansprüche 1 bis 3, ferner umfassend:
- Messen (628) eines Spiels in Umfangsrichtung der eingeführten Schaufeln (108);
- wenn das Spiel in Umfangsrichtung zu gering ist, Ersetzen (630) von einer oder mehreren Schaufeln am ersten Ende durch eine oder mehrere Schaufeln, die in Umfangsrichtung größer sind; und
- wenn das Spiel in Umfangsrichtung zu groß ist, Ersetzen (630) von einer oder mehreren Schaufeln am zweiten Ende durch eine oder mehrere Schaufeln, die in Umfangsrichtung kleiner sind.

5. Verfahren nach einem der Ansprüche 1 bis 4, wobei der Gelenkarm ein Sicherheitssystem aufweist, damit eine Kraft gemessen wird, die auf den Greifer ausgeübt wird, und der Gelenkarm angehalten wird, wenn diese Kraft eine vorgegebene Schwelle überschreitet; umfassend:
- Ansteuern des Gelenkarms derart, dass der Greifer bezogen auf eine Drehachse (AA') des Rotors so platziert wird, dass er sich radial gegenüber einer Nut befindet, die in der Stufe zum Einsetzen der Schaufeln vorgesehen ist;
- Ansteuern des Gelenkarms derart, dass der Greifer radial in Richtung der Nut bewegt wird, bis der Gelenkarm infolge des Kontakts des Greifers mit dem Rotor durch das Sicherheitssystem angehalten wird, und
- Festlegen einer radialen Position (R) der Nut (406) von der Position des Greifers, wenn der Gelenkarm vom Sicherheitssystem angehalten wurde;
und wobei das Ansteuern des Gelenkarms zum Laden der Schaufeln das Einsetzen der Schaufeln nacheinander in die Nut an der festgelegten radialen Position in der Reihenfolge der Liste umfasst.

6. Verfahren nach Anspruch 5, wobei am Ende des Gelenkarms eine Kamera (124) angebracht ist und ferner umfassend:
- Ansteuern des Gelenkarms zum Bewegen der Kamera entlang eines um die Drehachse (AA') des Rotors zentrierten Kreises sowie parallel zur Drehachse (AA'), während die Kamera gleichzeitig radial ausgerichtet bleibt, um die Position der Nut (406) im von der Kamera gelieferten Bild zu zentrieren und
- Bestimmen einer azimutalen Position (θ) und einer Position entlang der Drehachse (Z) der Nut (406), wobei das Ansteuern des Gelenkarms, damit der Greifer die Schaufeln greift und nacheinander in die Nut einsetzt, ferner auf Grundlage der bestimmten azimutalen Position (θ) und der bestimmten Position entlang der Drehachse (Z) erfolgt.

7. Verfahren nach Anspruch 5 oder 6, ferner umfassend:
- die Fotografie einer Platte (112), auf der die zu ladenden Schaufeln (108) angeordnet sind, und
- die Analyse der Fotografie zum Feststellen der Position der Schaufeln auf der Platte (112).

8. Verfahren nach einem der Ansprüche 1 bis 7, wobei das Rad (102A, 102B) zu einem Rotor (104) eines Turbinenstrahltriebwerks gehört.

9. Anlage zur Herstellung eines Propellers, wobei der Propeller eine kreisförmige Führungsschiene umfasst, die eine Nut zum Laden von Schaufeln aufweist, umfassend:
- einen Gelenkarm, der ein Ende aufweist, das mit einem Schaufelgreifer versehen ist;
- eine Computervorrichtung (508), die so ausgelegt ist, dass sie eine Liste von Schaufeln festlegt, die entlang der Führungsschiene (106A) in der Reihenfolge dieser Liste in einer vorgegebenen Rotationsrichtung von der Nut (406) aus aufeinander folgen sollen, bis sie wieder an diese Nut (406) gelangen, sodass die Liste eine vorgegebene Anzahl von als Schaufeln am ersten Ende bezeichneten Schaufeln an einem ersten Ende und eine vorgegebene Anzahl von als Schaufeln am zweiten Ende bezeichneten Schaufeln an einem zweiten Ende aufweist, wobei jede der Schaufeln am ersten Ende eine Größe in Umfangsrichtung aufweist, die kleiner ist als die von jeder der Schaufeln am zweiten Ende; und
- eine Computervorrichtung (126), die so ausgelegt ist, dass sie den Gelenkarm (118) ansteuert, damit der Greifer (122) die Schaufeln (108) der Reihenfolge der Liste entsprechend greift und sie in die Nut (406) ladt.

## Claims

1. A method (600) for loading vanes (108) onto a wheel (102A, 102B) comprising a circular slideway (106A, 106B) having a notch (406) for loading the vanes (108), by means of an articulated arm (118) having one end (120) equipped with a vane gripper (122), the method comprising:
- determining (622), by a computer system (508), a list of vanes intended to succeed one another along the slideway (106A) in the order of this list, following a predefined direction of rotation from the notch (406) until returning to this notch (406), so that the list has a predefined number of vanes at a first end, referred to as first end vanes, and a predefined number of vanes at a second end of the list, referred to as second end vanes, each of the first end vanes having a smaller circumferential size than each of the second end vanes; and
- controlling (624) the articulated arm (118) so that the gripper (122) seizes and loads the vanes (108) into the notch (406) in the order listed.

2. The method of claim 1, wherein each of the vanes in the list between the first and second end vanes has a greater weight than each of the first and second end vanes.

3. The method of claim 2, wherein the vanes in the list have decreasing weights from a middle of the list towards each end of the list.

4. The method according to any one of claims 1 to 3, further comprising:
- measuring (628) a circumferential clearance of the loaded vanes (108);
- if the circumferential clearance is too small, replacing (630) one or more first end vanes with one or more vanes of larger circumferential size; and
- if the circumferential clearance is too large, replacing (630) one or more second end vanes with one or more vanes having a smaller circumferential size.

5. The method according to any one of claims 1 to 4, wherein the articulated arm comprises a safety system for measuring a force exerted on the gripper and stopping the articulated arm when this force exceeds a predefined threshold, comprising:
- controlling the articulated arm to position the gripper radially opposite, with respect to an axis of rotation (AA') of the rotor, a notch provided in the stage for inserting the vanes;
- controlling the articulated arm to move the gripper radially in the direction of the notch until the articulated arm is stopped by the safety system following the encounter of the gripper with the rotor; and
- determining a radial position (R) of the notch (406) from the position of the gripper when the articulated arm has been stopped by the safety system;
and in which controlling the articulated arm to load the vanes comprises inserting the vanes one by one into the notch at the determined radial position, in the order of the list.

6. The method according to claim 5, wherein a camera (124) is attached to the end of the articulated arm and further comprising:
- controlling the articulated arm to move the camera along a circle centered on the axis of rotation (AA') of the rotor, as well as parallel to the axis of rotation (AA'), while keeping the camera oriented radially, in order to center the position of the notch (406) in the image provided by the camera; and
- determining an azimuthal position (θ) and along the axis of rotation (Z) of the notch (406), the control of the articulated arm so that the gripper seizes and inserts the vanes one by one into the notch also being carried out on the basis of the azimuthal positions (θ) and along the axis of rotation (Z) determined.

7. The method according to claim 5 or 6, further comprising:
- the photograph of a plate (112) on which the vanes (108) to be loaded are arranged; and
- analysing the photograph to determine the positions of the vanes on the plate (112).

8. The method according to any one of claims 1 to 7, wherein the wheel (102A, 102B) belongs to a rotor (104) of a turbojet engine.

9. An installation for manufacturing a propeller, the propeller comprising a circular slideway having a notch for loading vanes, comprising:
- an articulated arm with one end equipped with a vane gripper;
- a computer device (508) designed to determine a list of vanes intended to succeed one another along the slideway (106A) in the order of this list, following a predefined direction of rotation from the notch (406) to return to this notch (406), so that the list has a predefined number of vanes at a first end, referred to as first end vanes, and a predefined number of vanes at a second end of the list, referred to as second end vanes, each of the first end vanes having a smaller circumferential size than each of the second end vanes; and
- a computer device (126) designed to control the articulated arm (118) so that the gripper (122) seizes and loads the vanes (108) into the notch (406) according to the order of the list.
